# EUROPÄISCHE PATENTSCHRIFT

(11) **EP 4 328 001 B1**
(45) Veröffentlichungstag und Bekanntmachung des Hinweises auf die Patenterteilung: **04.03.2026**
(21) Anmeldenummer: 23186626.0
(22) Anmeldetag: 20.07.2023
(51) Int. Cl.: B29C 35/08, B29C 44/24, B29C 44/34, B32B 27/08

(54) **VERFAHREN ZUR HERSTELLUNG EINES FLEXIBLEN FLÄCHENELEMENTS SOWIE EIN DADURCH HERGESTELLTES FLÄCHENELEMENT**
METHOD FOR PRODUCING A FLEXIBLE SURFACE ELEMENT AND A SURFACE ELEMENT PRODUCED THEREBY
PROCÉDÉ DE FABRICATION D'UN ÉLÉMENT DE SURFACE FLEXIBLE ET ÉLÉMENT DE SURFACE AINSI FABRIQUÉ

(30) Priorität: 24.08.2022 DE 102022121413
(43) Veröffentlichungstag der Anmeldung: 28.02.2024
(73) Patentinhaber: Forbo Siegling GmbH, 30179 Hannover (DE)
(72) Erfinder: Schulz, Lennart, 33604 Bielefeld (DE); Buch, Torsten, 30900 Wedemark (DE); Molochnikov, Vadim, 30659 Hannover (DE); Nadler, Markus, 31275 Lehrte (DE)
(74) Vertreter: Scheffler, Jörg

(56) Entgegenhaltungen:
- EP-A1- 3 670 133
- WO-A1-2021/151408
- CN-A- 110 789 209
- US-A1- 2020 298 546
- US-A1- 2021 069 961

## Beschreibung

Die Erfindung betrifft ein Verfahren zur Herstellung eines flexiblen Flächenelements mit zumindest einer inneren oder äußeren thermoplastischen Nutzschicht, in die expandierbare Mikrohohlkugeln mit einer vorzugsweise homogenen Verteilung eingebracht werden, nach dem Obergriff des Hauptanspruchs.

Es ist allgemein bekannt, thermoplastische Kunststoffe unter Verwendung von Treibmitteln aufzuschäumen. Als Treibmittel kommen hierbei beispielsweise expandierbare Mikrohohlkugeln zum Einsatz.

Solche auch als Mikrospheren bezeichneten expandierbaren Mikrohohlkugeln bestehen aus einer dünnen Kunststoffhülle, beispielsweise Polyacrylnitril oder Copolymer und sind mit Gas, in der Regel mit Kohlenwasserstoffen, gefüllt. Durch die einwirkende Temperatur in der thermoplastischen Verarbeitung kommt es zu einer Erweichung der Kunststoffhülle und gleichzeitig zu einer Expansion des eingeschlossenen Gases. Hierdurch kommt es zu einer Expansion der Mikrohohlkugeln. Auch Kombinationen aus chemischen Treibmitteln und expandierbaren Mikrohohlkugeln werden eingesetzt.

Die Herstellung und die Verwendung expandierbarer thermoplastischer Mikrohohlkugeln sind unter anderem in der US 3 615 972 A offenbart. Die nichtexpandierten Kugeln enthalten flüchtige flüssige Treibmittel, die nach Anwendung von Hitze in den gasförmigen Zustand übergehen. Wenn Wärme zugeführt wird, erweicht die Polymerschale und die Kugeln expandieren, wenn das Treibmittel gasförmig wird.

Die EP 0 348 372 B1 beschreibt ein Verfahren, bei dem die nichtexpandierten Mikrohohlkugeln mit einem Heißgebläse und einer Abgasvorrichtung expandiert werden, beispielsweise durch Infrarotstrahlen.

Es sind auch Verfahren bekannt, thermoplastische Polyurethane mit Treibmitteln aufzuschäumen. Im Fall von thermoplastischem Polyurethan führen chemische Treibmittel zu einer vergleichsweise sehr groben Schaumstruktur und zu einer vermehrten Bildung von Lunkern.

Zur Behebung dieses Mangels beschreibt die EP 0 692 516 A1 ein Verfahren zur Herstellung von Schaumstoffen auf Basis von thermoplastischem Polyurethan, bei dem als Treibmittel eine Mischung von chemischen Treibmitteln und Mikrohohlkugeln eingesetzt wird.

Die US 6 103 152 A bezieht sich auf ein Verfahren zur Herstellung eines Polymerschaums, wobei eine geschmolzene Polymerzusammensetzung und expandierbare polymere Mikrokugeln gemischt werden, die in der Polymerzusammensetzung expandiert werden, bevor die Zusammensetzung aus der Düse austritt. Nach dem Austreten aus der Düse können die Mikrokugeln durch Erwärmen des Polymerschaums weiter expandiert werden. Der Polymerschaum kann eine im Wesentlichen glatte Fläche aufweisen und auch als Folie hergestellt werden.

Aus der US 2006 / 0 219 350 A1 ist eine Kleberzusammensetzung bekannt, die zwischen Flächen oder Schichten platziert ist und zwei thermoexpandierbare Mikrokugelspezies enthält, worin eine erste Spezies von Mikrokugeln dem Härten dient und eine zweite Spezies von Mikrokugeln dem Entbinden dient. Die Mikrokugeln der verschiedenen Spezies sind bei unterschiedlichen Temperaturen aktivierbar.

Die US 5 783 302 A beschreibt ein Kalandriersystem, mit dem in situ schäumbare dünne Folien hergestellt werden können. Die Folie enthält ein flüssiges Treibmittel oder Blähmittel. Die Harzmatrix kann Mikrohohlkügelchen aus Glas enthalten.

Die EP 2 134 425 B1 betrifft den Einsatz eines Endlosbands als Laufband für Lauftrainingsgeräte. Das Aufschäumen kann unter Hinzumischen von expandierbaren Mikrokügelchen zum thermoplastischen Material durchgeführt werden, wobei die so erhaltene geschäumte Schicht anschließend in einem zweiten Arbeitsgang mittels Kalandrierens auf den Zugkörper aufgetragen werden kann.

Aus der EP 3 670 133 A1 ist ein Verfahren zur Herstellung eines geformten Gegenstands, beispielsweise für Folien oder Tapeten, mit zumindest einer Wärmeausdehnungsschicht mit einem Bindemittel, beispielsweise aus thermoplastischem Harz, bekannt. Dabei werden in die Nutzschicht expandierbare Mikrohohlkugeln als Wärmeausdehnungsmaterial mit einer vorzugsweise homogenen Verteilung eingebracht. Zusätzlich wird auf die Nutzschicht eine zusätzliche Wärmeumwandlungsschicht lösbar aufgebracht. Durch anschließende thermische Energiezufuhr wird diese auf eine Temperatur innerhalb eines Expansionstemperaturbereichs der Mikrohohlkugeln erwärmt und expandiert. Mittels einer Trennschicht kann die Nutzschicht anschließend entfernt werden.

Die US 2020 / 0 298 546 A1 betrifft ein Verfahren zur Herstellung geformter Objekte, bei dem eine thermisch expandierbare Schicht aus einer Basisschicht und einer Beschichtung mit Licht bestrahlt wird. Die thermisch expandierbare Schicht enthält ein Bindemittel mit einem darin dispergierten Wärmeausdehnungsmaterial, beispielsweise Mikrokapseln. Die in einer Wärmeumwandlungsschicht freigesetzte Wärme einer zugeführten Wärmestrahlung bewirkt eine Ausdehnung der thermisch expandierbaren Schicht in einem vorbestimmten Muster und bewirkt eine Vernetzung des Bindemittels. Gemäß einer Variante kann die Wärmeumwandlungsschicht auf eine Trennschicht laminiert werden, diese vom Formgegenstand abgezogen und so die Wärmeumwandlungsschicht vom Formgegenstand entfernt werden.

Bei der Herstellung der flexiblen Flächenelemente erweist sich in der Praxis oftmals die lediglich eingeschränkte oder auch abschnittsweise unterschiedliche Oberflächenqualität der Nutzschicht als nachteilig. Insbesondere sind Unebenheiten, Mikroporen oder Lunker nicht zuverlässig auszuschließen. Zudem ist die eingeschränkte Maßhaltigkeit solcher Flächenelemente, beispielsweise infolge einer fortgesetzten Expansion der Mikrohohlkugeln nach dem Kalandrieren hinderlich.

Der Erfindung liegt die Aufgabe zugrunde, ein Verfahren zur Herstellung eines Flächenelements mit wesentlich verbesserten Eigenschaften der Nutzschicht zu schaffen.

Die Aufgabe wird erfindungsgemäß mit einem Verfahren zur Herstellung eines Flächenelements gemäß den Merkmalen des Anspruchs 1 gelöst. Die weitere Ausgestaltung der Erfindung ist den Unteransprüchen zu entnehmen.

Erfindungsgemäß ist also ein Verfahren zur Herstellung eines flexiblen Flächenelements mit einer äußeren und/oder inneren thermoplastischen, duroplastischen oder elastomeren Nutzschicht vorgesehen, bei dem die expandierbaren Mikrohohlkugeln mit einer vorzugsweise homogenen Verteilung eingebracht werden, wobei auf die Nutzschicht zumindest eine zusätzliche druckfeste Schicht lösbar aufgebracht und anschließend zumindest ein zu behandelnder Abschnitt des Flächenelements durch thermische Energiezufuhr vorzugsweise gleichmäßig auf eine bestimmte Temperatur innerhalb eines Expansionstemperaturbereichs unterhalb einer oberen Grenztemperatur der Mikrohohlkugeln erwärmt wird, sodass zumindest die in dem zu behandelnden Abschnitt enthaltenen Mikrohohlkugeln und/oder bereits teilexpandierte Mikrohohlkugeln zumindest teilweise expandiert werden, wobei die Expansion der Mikrohohlkugeln durch die druckfesten Eigenschaften der druckfesten Schicht begrenzt und der Energieeintrag durch eine elektromagnetische Strahlung insbesondere im Infrarot-Spektrum erreicht und insbesondere derart eingestellt wird, dass zumindest einzelne Bereiche und/oder Querschnittsebenen der Nutzschicht erwärmt werden, und wobei die druckfeste Schicht zumindest im Wesentlichen von der Strahlung ohne Erwärmung durchdrungen wird. Hierdurch stellt sich ein Gleichgewicht des Expansionsdrucks und des Gegendrucks der druckfesten Schicht ein, wobei die Materialstärke der Nutzschicht durch die Expansion vermindert und anschließend die druckfeste Schicht von der Nutzschicht zumindest abschnittsweise entfernt wird.

Erfindungsgemäß wird dabei unter einer druckfesten Schicht eine flexible, aber zugfeste, nicht elastische und allenfalls plastisch dehnbare Schicht verstanden, die geeignet ist, dem Expansionsdruck zu widerstehen, um so die Expansion maßgenau zu begrenzen. Aufgrund dieser Eigenschaften kann die druckfeste Schicht als zugfest bezeichnet werden

Durch die Auswahl der Wellenlänge der Strahlung kann zugleich die erreichbare Ebene innerhalb des Schichtaufbaus eingestellt werden. Hierdurch kann die energiereiche Strahlung selektiv auch auf vergleichsweise kleine, gegebenenfalls einzelne punktförmige Bereiche beschränkt werden, um so beliebige Strukturen zu erzeugen.

Bei einer typischen Anwendungsform des erfindungsgemäßen Verfahrens erfolgt eine gleichmäßige Erwärmung des flexiblen Flächenelements und somit der thermoplastischen Nutzschicht. Infolge der Expansion der Mikrohohlkugeln kann es zu einer Kompression der Nutzschicht kommen. Dabei wirkt die druckfeste Schicht als Deckelfolie der Expansion entgegen. Es hat sich bereits gezeigt, dass dadurch selbst kleinste Unebenheiten auf der Oberfläche der Nutzschicht homogenisiert werden, sodass die Oberfläche nach dem Entfernen der druckfesten Schicht eine sogenannte Spiegelflächenqualität hat. Hierdurch ergeben sich vollkommen neue Anwendungsmöglichkeiten des Flächenelements, beispielsweise in der Druckindustrie. Außerdem kann auch die Materialstärke des Flächenelements gezielt durch die Regelung der Temperatur mit hoher, reproduzierbarer Genauigkeit eingestellt werden.

Eine besonders vorteilhafte Ausführungsform der Erfindung wird dadurch erreicht, dass die druckfeste Schicht nach der Expansion der Mikrohohlkugeln von der Nutzschicht vollflächig entfernt wird. Die Oberflächenbeschaffenheit der so freigelegten Nutzschicht entspricht dann der Oberflächenbeschaffenheit der zugewandten Seite der druckfesten Schicht und erreicht in der Praxis höchste Qualitätsanforderungen. Selbstverständlich können mittels der druckfesten Schicht auch Strukturierungen oder Muster als Negativ der entsprechenden Beschaffenheit der druckfesten Schicht auf die Nutzschicht übertragen werden.

Dabei hat es sich bereits als besonders vorteilhaft erwiesen, wenn die druckfeste Schicht eine Folie, insbesondere aus Polyester, als einen wesentlichen Materialbestandteil und vorzugsweise eine konstante Materialstärke aufweist. Hiervon abweichend können auch Bereiche mit unterschiedlicher Materialstärke vorgesehen sein, um so beispielsweise in einzelnen Bereichen eine begrenzte Dehnbarkeit der druckfesten Schicht zu ermöglichen, die zu lokalen Erhebungen in der Nutzschicht führt.

Darüber hinaus können mittels der druckfesten Schicht bestimmte Stoffe oder Substanzen auf oder in die Oberfläche der Nutzschicht übertragen werden oder beim Entfernen der druckfesten Schicht auf der Nutzschicht verbleiben.

Es ist denkbar, die druckfeste Schicht als eine Metallfolie auszuführen, die gegebenenfalls auch mehrfach verwendbar ist. Besonders bevorzugt weist die druckfeste Schicht eine biaxial bzw. bidirektional vorgereckte Folie auf, die beispielsweise auch als Schutzfolie verwendet und erst vor dem Gebrauch des Flächenelements von der Nutzschicht entfernt wird.

Eine andere, ebenfalls besonders Erfolg versprechende Variante des Verfahrens wird dadurch geschaffen, dass der Energieeintrag bei der Erwärmung des zu behandelnden Abschnitts des Flächenelements auf eine Temperatur oberhalb der Expansionstemperatur partiell oder abschnittsweise abweichend erfolgt. Hierdurch entsteht zumindest ein Bereich mit einem geringeren Energieeintrag und zumindest ein weiterer Bereich mit einem erhöhten Energieeintrag. Entsprechend der durch die druckfeste Schicht begrenzten räumlichen Expansion kommt es so in den verschiedenen Bereichen zu einer unterschiedlichen Verdichtung und infolgedessen zu Bereichen des Flächenelements mit unterschiedlicher Dichte. Dadurch weichen beispielsweise auch weitere mechanische Eigenschaften, wie etwa die Flexibilität in den Bereichen voneinander ab. In der Praxis können dadurch nachgiebige Zonen geschaffen werden, die sich beispielsweise für Anwendungen als Transportband im Bereich von Umlenkungen als vorteilhaft erweisen.

Eine weitere besonders praxisgerechte Ausgestaltungsform der Erfindung wird dadurch erreicht, dass die druckfeste Schicht partiell oder abschnittsweise vor, während oder nach der Erwärmung der Nutzschicht durch den Energieeintrag entfernt und/oder modifiziert wird. Beispielsweise kann die druckfeste Schicht durch mechanische Werkzeuge oder durch Laserstrahlung ausgeschnitten, durchbrochen oder geschwächt werden, sodass in diesen Bereichen die Nutzschicht hervortritt oder sich konvex ausformt. Indem die bereits auf der Nutzschicht haftende druckfeste Schicht nachträglich verändert werden kann, lassen sich individuelle Beschaffenheiten der Nutzschicht erzeugen.

Dabei wird die lösbare Verbindung der druckfesten Schicht und der Nutzschicht beispielsweise durch eine Adhäsionsverbindung realisiert.

Bei einer anderen vorteilhaften Variante des erfindungsgemäßen Verfahrens werden auf die Nutzschicht mehrere, insbesondere unterschiedliche druckfeste Schichten lösbar aufgebracht, wobei die verschiedenen Schichten insbesondere auch unterschiedliche Teilbereiche abdecken können. Durch die Verwendung mehrerer druckfester Schichten kann die Expansion der Nutzschicht und dadurch die Materialstärke des so hergestellten Flächenelements eingestellt werden. Beispielsweise treten dadurch Bereiche mit einer geringeren Anzahl druckfester Schichten gegenüber anderen Bereichen mit einer höheren Anzahl druckfester Schichten hervor, sodass lokale Vertiefungen und Erhebungen realisiert werden können.

In ähnlicher Weise können einzelne druckfeste Schichten Ausschnitte oder Durchbrechungen, beispielsweise mit einem Muster aufweisen, welches sich entsprechend auf die Nutzschicht übertragen lässt.

Die thermische Energie kann selektiv in verschiedenen gegeneinander abgegrenzten Bereichen, insbesondere in einer Längsrichtung verlaufenden Spuren, in einer Querrichtung verlaufenden Abschnitten und/oder in verschiedenen Querschnittsebenen verlaufenden Ebenen des Flächenelements mit unterschiedlicher Wellenlänge oder Intensität eingebracht werden, sodass die Mikrohohlkugeln in den verschiedenen Bereichen unterschiedlich expandiert werden.

Indem also die Mikrohohlkugeln, die in einem die Matrix für die Mikrohohlkugeln bildenden Material des Flächenelements gebunden sind, nach der Fertigstellung des Flächenelements, welches beispielsweise neben der Nutzschicht auch noch weitere dekorative oder funktionale Schichten aufweisen kann, selektiv aktiviert werden, kommt es zu einer von dem Energieeintrag abhängigen Expansion der Mikrohohlkugeln. So können Materialeigenschaften wie die Dämpfung oder die Formstabilität in Verbindung mit der druckfesten Schicht mit hoher Genauigkeit eingestellt werden, wobei die äußere Kontur, insbesondere die Stärke, des Flächenelements durch die druckfeste Schicht begrenzt ist und so eine hohe Maßhaltigkeit des Flächenelements sichergestellt wird. Dabei soll im Sinne der Erfindung unter dem Begriff "Bereich" ein Flächenbereich in der Ebene und/oder eine Ebene innerhalb der Materialstärke parallel zu der Außenfläche verstanden werden, wobei eine vollflächige Aktivierung von dem Erfindungsgedanken umfasst sein soll. Alternativ zu einer differenzierten Aktivierung verschiedener Bereiche mit unterschiedlicher Strahlungsenergie können nicht expandierte Mikrohohlkugeln in anderen Teilbereichen erhalten bleiben. Dabei ist die Erfindung nicht auf Mikrohohlkugeln mit bestimmten Eigenschaften beschränkt. Vielmehr können Mikrohohlkugeln mit unterschiedlichen Eigenschaften in das Flächenelement eingebracht werden.

Dabei hat es sich auch bereits als besonders zweckmäßig erwiesen, wenn die Mikrohohlkugeln in verschiedenen gegeneinander räumlich abgegrenzten Bereichen in unterschiedlichen Mengenverhältnissen bezogen auf das Volumen oder die Masse der Mikrohohlkugeln in das Trägermaterial eingebracht werden, um so vor allem diejenigen Bereiche mit einer ausreichenden Menge der Mikrohohlkugeln zu versorgen, in denen eine Aktivierung der Mikrohohlkugeln vorgesehen ist.

Dabei hat es sich als besonders Erfolg versprechend erwiesen, wenn durch die Auswahl bestimmter Wellenlängenbereiche die Mikrohohlkugeln in verschiedenen, zu der Laufseite unterschiedlich beabstandeten Ebenen und/oder in verschiedenen Längsabschnitten, beispielsweise Randabschnitten, expandiert und/oder aktiviert werden, um die Eigenschaften des Flächenelements gezielt in vorbestimmten Teilbereichen zu optimieren.

Weiterhin ist es besonders sinnvoll, wenn zusätzlich insbesondere faserförmige oder strangförmige Füllstoffe in die Nutzschicht eingebracht werden. Dadurch kann bedarfsweise eine weitere Verstärkung der Nutzschicht erreicht werden, um so die Formstabilität des herzustellenden Flächenelements weiter zu verbessern. Es hat sich bereits gezeigt, dass durch mehrlagige Füllstoffe mit dazwischen eingebrachten Mikrohohlkugeln eine erhebliche Verbesserung der Festigkeit unter Berücksichtigung der Gesamtmasse des so erzeugten Verbunds erreicht werden kann.

Darüber hinaus ist es auch von Vorteil, wenn die Mikrohohlkugeln aktive oder reaktive Substanzen enthalten, die durch die energiereiche Strahlung freigesetzt werden und die freigesetzten Substanzen mit Bestandteilen des angrenzenden Materials des Flächenelements reagieren. Hierzu werden die Mikrohohlkugeln expandiert, bis diese platzen oder die jeweilige Hülle der Mikrohohlkugeln durchlässig wird und das Füllmittel austritt. Das Füllmittel gelangt so als gasförmiges oder flüssiges Fluid in die angrenzenden Bereiche des Bandmaterials und reagiert mit den dort vorhandenen Materialen des Flächenelements. Denkbar ist beispielsweise ein Härter, welcher zu einer irreversiblen Reaktion mit dem Material der Nutzschicht führt, um diese zu härten. Alternativ kann durch die Expansion der Mikrohohlkugeln auch eine Schwächung der Hülle derart vorgenommen werden, dass im Gebrauch des Flächenelements der auftretende Verschluss zu einer Durchlässigkeit der Hülle führt. Auf diese Weise dienen die Mikrohohlkugeln auch als Träger für eine Verschleißindikatorsubstanz. Ein auf diese Weise erzielbarer Farbumschlag ist visuell wahrnehmbar und kann daher als Verschleißindikator genutzt werden.

Selbstverständlich kann der Farbstoff auch derart beschaffen sein, dass dieser unter Umgebungsbedingungen unsichtbar ist und erst durch Licht mit bestimmter Wellenlänge (UV) erkennbar wird.

Bei einer als Kontaminationsindikator dienenden Substanz enthalten die Mikrohohlkugeln Mikroorganismen, die beispielsweise mit Feuchtigkeit oder Luft reagieren, sodass bei Verschleiß die Mikroorganismen in Kontakt kommen und biologische Reaktionen auslösen. Selbstverständlich kann der Reaktionspartner der Mikroorganismen auch aus dem Transportgut stammen, beispielsweise Lebensmittel oder chemische Substanzen. Umgekehrt könnten die freigesetzten Substanzen auch dekontaminierende, desinfizierende, biozide oder sonstige Wirkstoffe freisetzen, um das Transportgut zu schützen.

Selbstverständlich können Mikrohohlkugeln zusammen mit weiteren Additiven, wie beispielsweise Farb- oder Leitfähigkeitsadditiven, vermischt werden, um bestimmte gewünschte Eigenschaften zu realisieren.

Besonders vorteilhaft ist es dabei, wenn die energiereiche Strahlung mittels einer Strahlungsquelle mit einer an den zu aktivierenden Bereich angepassten, insbesondere einstellbaren Wellenlänge eingebracht wird, sodass mit der Strahlungsquelle eine Wellenlängeim Infrarotbereich in den jeweiligen Bereich des Flächenelements in eine frei wählbare Schichtebene eingebracht wird. Andere Bereiche bleiben dadurch von der energiereichen Strahlung unbeeinflusst, sodass dort eine Erwärmung ausgeschlossen ist.

Die Einsatz- und Verwendungsmöglichkeiten des Flächenelements sind unbegrenzt. So eignet sich das durch das Verfahren hergestellte Flächenelement beispielsweise auch als ein Prozess- oder Druckband zur Übertragung von druckfähigen Substanzen wie Farbstoffen. Die dabei erforderliche, in engen Toleranzgrenzen vorbestimmte Kompressibilität lässt sich dabei durch die druckfeste Schicht optimal einstellen.

Gemäß einer besonders zweckmäßigen Ausgestaltungsform der Erfindung weist das Flächenelement zumindest eine thermoplastische Nutzschicht sowie zumindest einen Zugträger auf, sodass die die Mikrohohlkugeln enthaltende Nutzschicht im Betrieb keine oder lediglich geringe Zugkräfte aufnimmt.

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt jeweils in einem Querschnitt in
- Fig. 1: ein Flächenelement mit einer Nutzschicht während der Erwärmung der in der Nutzschicht enthaltenen Mikrohohlkugeln;
- Fig. 2: das Flächenelement nach der Expansion der Mikrohohlkugeln mit einer entgegen einer druckfesten Schicht komprimierten Nutzschicht;
- Fig. 3: das Flächenelement nach der Entfernung der druckfesten Schicht.

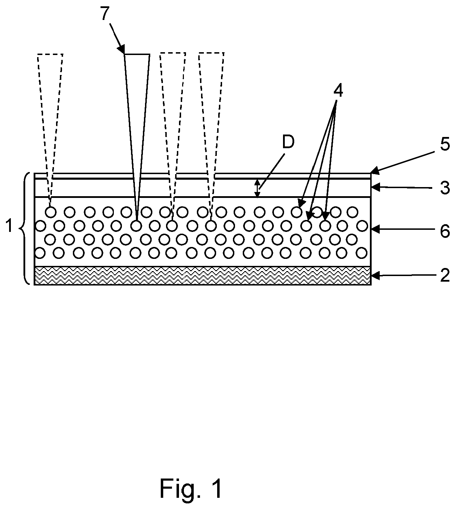

Das erfindungsgemäße Verfahren zur Herstellung eines flexiblen Flächenelements 1 wird nachstehend anhand der Figuren 1 bis 3 näher erläutert. Das gezeigte Flächenelement 1 ist für den Einsatz in der Druckindustrie bestimmt, sodass höchste Anforderungen an die Oberflächenbeschaffenheit einer auf einem Zugträger 2 vorhandenen thermoplastischen Nutzschicht 3 aus TPU gestellt werden. In eine Funktionsschicht 6 mit der Nutzschicht 3 sind in einer gleichmäßigen Verteilung expandierbare Mikrohohlkugeln 4 eingebracht, die zur Verdeutlichung des Erfindungsgedankens nicht maßstabsgerecht, sondern überzeichnet dargestellt sind. Auf die Nutzschicht 3 ist eine druckfeste Schicht 5 aufgebracht, die keine Mikrohohlkugeln 4 enthält. Selbstverständlich können die Mikrohohlkugeln 4 auch ungleichmäßig verteilt eingebracht werden.

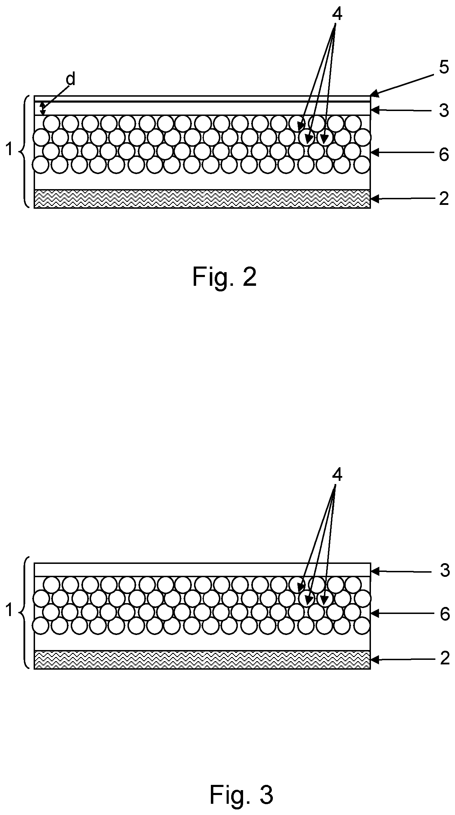

Der wesentliche erfindungsgemäße Gedanke beruht auf der flächigen oder partiellen Aktivierung der Mikrohohlkugeln 4 durch die thermische Energiezufuhr einer energiereichen Strahlung 7, insbesondere einer elektromagnetischen Strahlung im Infrarotspektrum, um eine nicht gezeigte Hülle der Mikrohohlkugeln 4 über ihre Erweichungstemperatur zu erwärmen. Hierzu durchdringt die Strahlung 7 die druckfeste Schicht 5 sowie die Nutzschicht 3 und wird in der gewünschten Querschnittsebene der Funktionsschicht 6 fokussiert oder konzentriert, wobei die druckfeste Schicht 5 und die Nutzschicht 3 nicht oder nur sehr geringfügig erwärmt werden. Dadurch expandieren die betroffenen Mikrohohlkugeln 4, wie dies in Figur 2 zu erkennen ist.

Die Expansion der Mikrohohlkugeln 4 führt nun zunächst zu veränderten mechanischen Eigenschaften des Flächenelements 1, das so erstmals gezielt an den jeweiligen Anwendungszweck angepasst werden kann.

Ein wesentlicher erfindungsgemäßer Aspekt ist darüber hinaus jedoch die Verdichtung der Nutzschicht 3 entgegen der als Sperre bzw. Widerlager wirkenden druckfesten Schicht 5, wodurch deren Dicke D auf eine reduzierte Dicke d vermindert wird. Zugleich erhält die so erzeugte kompakte Nutzschicht 3 hervorragende Oberflächeneigenschaften, insbesondere eine optimal glatte Oberfläche in Spiegelflächenqualität. Insbesondere werden dadurch sämtliche Oberflächendefekte ausgeglichen bzw. entfernt.

Wie in Figur 3 dargestellt, wird die druckfeste Schicht schließlich entfernt, sodass die Oberfläche der Nutzschicht 3 nutzbar ist.

### BEZUGSZEICHENLISTE

- 1: Flächenelement
- 2: Zugträger
- 3: Nutzschicht
- 4: Mikrohohlkugel
- 5: druckfeste Schicht

- 6: Funktionsschicht
- 7: Strahlung

- D: Dicke
- d: Dicke

## Patentansprüche

1. Verfahren zur Herstellung eines flexiblen Flächenelements (1) mit zumindest einer thermoplastischen, duroplastischen und/oder elastomeren Nutzschicht (3), wobei in die Nutzschicht (3) und/oder eine Funktionsschicht (6) expandierbare Mikrohohlkugeln (4) mit einer vorzugsweise homogenen Verteilung eingebracht werden, wobei auf die Nutzschicht (3) zumindest eine zusätzliche Schicht (5) lösbar aufgebracht wird, und wobei anschließend zumindest ein zu behandelnder Abschnitt des Flächenelements (1) durch thermische Energiezufuhr vorzugsweise gleichmäßig auf eine Temperatur innerhalb eines Expansionstemperaturbereichs der Mikrohohlkugeln (4) erwärmt wird, sodass zumindest die in dem zu behandelnden Abschnitt enthaltenen Mikrohohlkugeln (4) zumindest teilweise expandiert werden und/oder bereits teilexpandierte Mikrohohlkugeln (4) weiter expandiert werden, wobei die Schicht (5) eine druckfeste Schicht (5) ist und die Expansion der Mikrohohlkugeln (4) durch die druckfesten Eigenschaften der druckfesten Schicht (5) begrenzt wird, die anschließend von der Nutzschicht (3) zumindest abschnittsweise entfernt wird, und der Energieeintrag durch eine elektromagnetische Strahlung (7) insbesondere im Infrarot-Spektrum (IR) erreicht und insbesondere derart eingestellt wird, dass zumindest einzelne Bereiche und/oder Querschnittsebenen der Nutzschicht (3) erwärmt werden, und dass die druckfeste Schicht (5) zumindest im Wesentlichen von der Strahlung (7) ohne Erwärmung durchdrungen wird.

2. Verfahren nach Anspruch 1, **dadurch gekennzeichnet, dass** die druckfeste Schicht (5) eine Folie, insbesondere Polyester, als einen wesentlichen Materialbestandteil aufweist.

3. Verfahren nach Anspruch 1 oder 2, **dadurch gekennzeichnet, dass** die druckfeste Schicht (5) eine insbesondere biaxial vorgereckte Folie aufweist.

4. Verfahren nach zumindest einem der vorhergehenden Ansprüche, **dadurch gekennzeichnet, dass** die druckfeste Schicht (5) partiell oder abschnittsweise vor und/oder während der Erwärmung entfernt und/oder modifiziert wird.

5. Verfahren nach zumindest einem der vorhergehenden Ansprüche, **dadurch gekennzeichnet, dass** auf die Nutzschicht (3) mehrere, insbesondere unterschiedliche druckfeste Schichten (5) aufgebracht werden.

6. Verfahren nach zumindest einem der vorhergehenden Ansprüche, **dadurch gekennzeichnet, dass** die Materialstärke (D) der Nutzschicht (3) infolge der Expansion der Mikrohohlkugeln (4) auf eine Materialstärke (d) reduziert wird.

7. Verfahren nach zumindest einem der vorhergehenden Ansprüche, **dadurch gekennzeichnet, dass** die Energie einer Strahlung (7) durch die druckfeste Schicht (5) hindurch selektiv in verschiedenen gegeneinander abgegrenzten Bereichen und/oder in verschiedenen Querschnittsebenen der Nutzschicht (3) und/oder der Funktionsschicht (6) des Flächenelements (1) unterschiedlich, insbesondere mit unterschiedlichen Parametern, einwirkt, und die Mikrohohlkugeln (4) dadurch in den verschiedenen Bereichen und Querschnittsebenen des Flächenelements (1) unterschiedlich expandiert werden.

## Claims

1. Method for producing a flexible surface element (1) comprising at least one thermoplastic, thermosetting-plastic and/or elastomeric useful layer (3), wherein expandable hollow microspheres (4) are introduced into the useful layer (3) and/or a functional layer (6) with a preferably homogeneous distribution, wherein at least one additional layer (5) is releasably applied to the useful layer (3), and wherein at least one portion to be treated of the surface element (1) is subsequently heated by thermal energy supply preferably uniformly to a temperature within an expansion temperature range of the hollow microspheres (4), so that at least the hollow microspheres (4) contained in the portion to be treated are at least partially expanded and/or already partially expanded hollow microspheres (4) are further expanded, wherein the layer (5) is a pressure-resistant layer (5) and the expansion of the hollow microspheres (4) is limited by the pressure-resistant properties of the pressure-resistant layer (5), which is subsequently removed from the useful layer (3) at least in portions, and the energy input is achieved by an electromagnetic radiation (7) in particular in the infrared spectrum (IR) and in particular is set in such a way that at least individual regions and/or cross-sectional planes of the useful layer (3) are heated, and that the pressure-resistant layer (5) is at least substantially penetrated by the radiation (7) without heating.

2. Method according to Claim 1, **characterized in that** the pressure-resistant layer (5) comprises a film, in particular polyester, as an essential material constituent.

3. Method according to Claim 1 or 2, **characterized in that** the pressure-resistant layer (5) comprises an in particular biaxially prestretched film.

4. Method according to at least one of the preceding claims, **characterized in that** the pressure-resistant layer (5) is removed and/or modified partially or in portions before and/or during heating.

5. Method according to at least one of the preceding claims, **characterized in that** a plurality of, in particular different, pressure-resistant layers (5) are applied to the useful layer (3).

6. Method according to at least one of the preceding claims, **characterized in that** the material thickness (D) of the useful layer (3) is reduced to a material thickness (d) as a result of the expansion of the hollow microspheres (4).

7. Method according to at least one of the preceding claims, **characterized in that** the energy of a radiation (7) through the pressure-resistant layer (5), selectively in different mutually delimited regions and/or in different cross-sectional planes of the useful layer (3) and/or the functional layer (6) of the surface element (1), acts differently, in particular with different parameters, and the hollow microspheres (4) are thus expanded differently in the different regions and cross-sectional planes of the surface element (1).

## Revendications

1. Procédé pour la fabrication d'un élément de surface flexible (1) comportant au moins une couche utile thermoplastique, thermodurcissable et/ou élastomère (3), dans lequel des microbilles creuses expansibles (4) sont introduites en une répartition de préférence homogène dans la couche utile (3) et/ou une couche fonctionnelle (6), dans lequel au moins une couche supplémentaire (5) est appliquée de manière amovible sur la couche utile (3), et dans lequel au moins une section à traiter de l'élément de surface (1) est ensuite chauffée de préférence uniformément par apport d'énergie thermique à une température dans une plage de température d'expansion des microbilles creuses (4), de sorte qu'au moins les microbilles creuses (4) contenues dans la section à traiter sont au moins partiellement expansées et/ou les microbilles creuses (4) déjà partiellement expansées sont expansées davantage, dans lequel la couche (5) est une couche résistante à la pression (5) et l'expansion des microbilles creuses (4) est limitée par les propriétés de résistance à la pression de la couche résistante à la pression (5), qui est ensuite retirée au moins par sections de la couche utile (3), et l'apport d'énergie est réalisé par un rayonnement électromagnétique (7), en particulier dans le spectre infrarouge (IR), et est en particulier réglé de manière qu'au moins certain(e)s zones et/ou plans transversaux de la couche utile (3) soient chauffé(e)s, et que la couche résistante à la pression (5) soit au moins essentiellement traversée sans chauffage par le rayonnement (7).

2. Procédé selon la revendication 1, **caractérisé en ce que** la couche résistante à la pression (5) comporte un film, en particulier en polyester, en tant qu'un constituant essentiel de matière.

3. Procédé selon la revendication 1 ou 2, **caractérisé en ce que** la couche résistante à la pression (5) comporte un film pré-étiré, en particulier biaxialement.

4. Procédé selon au moins l'une des revendications précédentes, **caractérisé en ce que** la couche résistante à la pression (5) est retirée et/ou modifiée partiellement ou par sections avant et/ou pendant le chauffage.

5. Procédé selon au moins l'une des revendications précédentes, **caractérisé en ce que** plusieurs couches résistantes à la pression (5), en particulier différentes, sont appliquées sur la couche utile (3).

6. Procédé selon au moins l'une des revendications précédentes, **caractérisé en ce que** l'épaisseur de matière (D) de la couche utile (3) est réduite à une épaisseur de matière (d) par suite de l'expansion des microbilles creuses (4).

7. Procédé selon au moins l'une des revendications précédentes, **caractérisé en ce que** l'énergie d'un rayonnement (7) exerce sélectivement une action à travers la couche résistante à la pression (5) dans différentes zones délimitées entre elles et/ou dans différents plans transversaux de la couche utile (3) et/ou de la couche fonctionnelle (6) de l'élément de surface (1) différemment, en particulier avec des paramètres différents, et les microbilles creuses (4) sont ainsi expansées différemment dans les différent(e)s zones et plans transversaux de l'élément de surface (1).
